# EUROPEAN PATENT APPLICATION

(11) **EP 4 467 601 A1**
(43) Date of publication of application: **27.11.2024**
(21) Application number: 23743152.3
(22) Date of filing: 11.01.2023
(51) Int. Cl.: C08L 7/00, C08J 3/22, C08J 3/24, C08K 3/013, C08K 5/14, C08L 9/00

(54) **CROSSLINKED RUBBER COMPOSITION, METHOD FOR PRODUCING CROSSLINKED RUBBER COMPOSITION, AND RUBBER PRODUCT**

(30) Priority: 21.01.2022 JP 2022008291; 18.04.2022 JP 2022068421
(71) Applicant: BRIDGESTONE CORPORATION, Chuo-ku Tokyo 104-8340 (JP)
(72) Inventor: HASEGAWA, Hiroki, Tokyo 104-8340 (JP); KOTANI, Kyohei, Tokyo 104-8340 (JP); SHODA, Yasuhiro, Tokyo 104-8340 (JP)
(74) Representative: Marks & Clerk LLP
(86) International application number: PCT/JP2023/000487
(87) International publication number: WO 2023/140157

(57) **Abstract**

The problem to be solved by the present disclosure is to provide a crosslinked rubber composition having further improved crack propagation resistance after thermal degradation. The solution is a crosslinked rubber composition formed by crosslinking a rubber composition containing a rubber component, syndiotactic 1,2-polybutadiene, and an organic peroxide, wherein a net-like three-dimensional network is formed in a matrix of the rubber component, and the net-like three-dimensional network includes a portion formed of a crystal of the syndiotactic 1,2-polybutadiene and a portion in which the rubber component and the syndiotactic 1,2-polybutadiene are mutually dissolved.

## Description

### TECHNICAL FIELD

The present disclosure relates to a crosslinked rubber composition, a method of manufacturing a crosslinked rubber composition, and a rubber product.

### BACKGROUND

In general, high durability is required for rubber compositions used in the manufacturing of rubber products such as tires, seismic isolation rubber, rubber crawlers, hoses, and fender protection materials. However, conventional diene-based rubbers that have been frequently used in the rubber industry, such as polybutadiene rubber (BR) and styrene-butadiene copolymer rubber (SBR), lack sufficient resistance to cracks caused by ozone, degradation over time, or other factors, namely, crack propagation resistance, is not adequate. Under such circumstances, various rubber ingredients, compounding agents, and rubber compositions containing these have been developed.

For example, one known means to improve the crack propagation resistance in rubber compositions is a method by incorporating syndiotactic 1,2-polybutadiene (see, for instance, PTL 1).

### CITATION LIST

### Patent Literature

PTL 1: JP H8-85303 A

### SUMMARY

### (Technical Problem)

By incorporating syndiotactic 1,2-polybutadiene (sPB) as disclosed in PTL 1, the crack propagation resistance of rubber compositions, also known as "crack growth resistance", after crosslinking can be improved. However, the present inventors have found through our investigation that even with the incorporation of sPB, rubber compositions after crosslinking do not exhibit sufficient crack propagation resistance after thermal degradation, indicating that there is further room for improvement.

Therefore, the present disclosure aims to solve the aforementioned problem of prior art, and an object thereof is to provide a crosslinked rubber composition having further improved crack propagation resistance after thermal degradation and a method of manufacturing such a crosslinked rubber composition.

Furthermore, another object of the present disclosure is to provide a rubber product that contains such a crosslinked rubber composition and is excellent in crack propagation resistance after thermal degradation.

### (Solution to Problem)

The summary of a crosslinked rubber composition, a method of manufacturing a crosslinked rubber composition, and a rubber product of the present disclosure that solves the above problem is as follows.
[1] A crosslinked rubber composition formed by crosslinking a rubber composition comprising a rubber component, syndiotactic 1,2-polybutadiene, and an organic peroxide,
   wherein a net-like three-dimensional network is formed in a matrix of the rubber component, and
   the net-like three-dimensional network comprises a portion formed of a crystal of the syndiotactic 1,2-polybutadiene and a portion in which the rubber component and the syndiotactic 1,2-polybutadiene are mutually dissolved.
[2] The crosslinked rubber composition according to [1], wherein the syndiotactic 1,2-polybutadiene has a weight average molecular weight of 100,000 to 750,000.
[3] The crosslinked rubber composition according to [1] or [2], wherein the syndiotactic 1,2-polybutadiene has a syndiotacticity in 1,2-bonds of 60% or more.
[4] The crosslinked rubber composition according to any one of [1] to [3], wherein the syndiotactic 1,2-polybutadiene has a crystallinity of 25% to 80%.
[5] The crosslinked rubber composition according to any one of [1] to [4], wherein the syndiotactic 1,2-polybutadiene has a melting point of 100°C to 180°C.
[6] The crosslinked rubber composition according to any one of [1] to [5], wherein the syndiotactic 1,2-polybutadiene has a 1,2-bond content of 80 mass% or more.
[7] The crosslinked rubber composition according to any one of [1] to [6], wherein a content of the syndiotactic 1,2-polybutadiene in the rubber composition is 5 to 40 parts by mass per 100 parts by mass of the rubber component.
[8] The crosslinked rubber composition according to any one of [1] to [7], wherein the rubber component comprises polyisoprene rubber.
[9] The crosslinked rubber composition according to any one of [1] to [8], wherein the rubber composition further comprises a filler.
[10] The crosslinked rubber composition according to any one of [1] to [9], wherein a content of the organic peroxide in the rubber composition is 1 to 10 parts by mass per 100 parts by mass of the rubber component.
[11] The crosslinked rubber composition according to any one of [1] to [10], wherein the rubber composition is free of a vulcanizing agent, or a content of a vulcanizing agent is 1 part by mass or less per 100 parts by mass of the rubber component.
[12] A method of manufacturing a crosslinked rubber composition, comprising:
   kneading a rubber composition comprising a rubber component and syndiotactic 1,2-polybutadiene at a temperature equal to or higher than a melting point of the syndiotactic 1,2-polybutadiene; and
   adding an organic peroxide to the kneaded rubber composition and crosslinking the rubber composition at a temperature equal to or higher than the melting point of the syndiotactic 1,2-polybutadiene.
[13] A rubber product selected from the group consisting of a tire, a seismic isolation rubber, a rubber crawler, a hose, and a fender protection material, comprising
   the crosslinked rubber composition according to any one of [1] to [11], or a crosslinked rubber composition obtained by the method of manufacturing a crosslinked rubber composition according to [12].

### (Advantageous Effect)

According to the present disclosure, a crosslinked rubber composition having further improved crack propagation resistance after thermal degradation and a method of manufacturing such a crosslinked rubber composition are provided.

Furthermore, according to the present disclosure, a rubber product excellent in crack propagation resistance after thermal degradation is provided.

### DETAILED DESCRIPTION

A crosslinked rubber composition comprising: a method of manufacturing a crosslinked rubber composition, and a rubber product of the present disclosure are described below in detail with reference to embodiments thereof.

### <Crosslinked Rubber Composition>

A crosslinked rubber composition of the present disclosure is formed by crosslinking a rubber composition containing a rubber component, syndiotactic 1,2-polybutadiene, and an organic peroxide. In the crosslinked rubber composition of the present disclosure, a net-like three-dimensional network is formed in the matrix of the rubber component. This net-like three-dimensional network includes portions formed of crystals of the syndiotactic 1,2-polybutadiene and portions in which the rubber component and the syndiotactic 1,2-polybutadiene are mutually dissolved.

The crosslinked rubber composition of the present disclosure has a structure in which the syndiotactic 1,2-polybutadiene (hereinafter referred to as "sPB") forms a net-like three-dimensional network (also known as a double network structure) in the matrix of the rubber component. The sPB is one of the crystalline polymers, that dissipates input energy by sacrificially breaking crystals thereof under high strain, and further, due to its compatibility with the rubber component, it can form a net-like three-dimensional network (double network) in the crosslinked rubber composition, including portions formed of crystals of sPB and portions in which the rubber component/sPB are mutually dissolved. As a result of this double network structure, the crosslinked rubber composition of the present disclosure achieves excellent crack propagation resistance due to the high energy dissipation effect due to the crystalline portions of sPB and the flexibility derived from the portions in which the rubber component/sPB are mutually dissolved.

Furthermore, due to the high reactivity of the vinyl bonds (1,2-bonds) in syndiotactic 1,2-polybutadiene with the organic peroxide, in the crosslinked rubber composition of the present disclosure, crosslinking the rubber composition forming the double network by the organic peroxide results in a significant improvement in crack propagation resistance after thermal degradation compared to conventional crosslinking by sulfur (vulcanization).

In general, crosslinking by sulfur (vulcanization) does not sufficiently suppress the decline in crack propagation resistance after thermal degradation of crosslinked rubber compositions (vulcanized rubber compositions).

In the present disclosure, a rubber composition refers to an uncrosslinked rubber composition, and a crosslinked rubber composition is one obtained by crosslinking the same.

There is no particular limitation on the method of confirming whether or not a net-like three-dimensional network (double network) structure as described above has been formed. For example, the formation of a double network can be confirmed by checking an elastic modulus image under an atomic force microscope (AFM) to see that the sPB forms a network co-continuous structure in the rubber component as a matrix polymer. The presence or absence of double network formation can also be inferred by the formulation of the rubber composition before crosslinking and the manufacturing conditions such as crosslinking temperature.

### (Rubber Component)

The rubber composition contains a rubber component, and the rubber component provides rubber elasticity to the composition. As the rubber component, diene-based rubbers are preferred. Examples of diene-based rubbers include polyisoprene rubber, styrene-butadiene copolymer rubber (SBR), polybutadiene rubber (BR), acrylonitrile-butadiene copolymer rubber (NBR), butyl rubber (IIR), halogenated butyl rubber (such as Cl-IIR and Br-IIR), ethylene-propylene-diene terpolymer rubber (EPDM), ethylene-butadiene copolymer rubber, and propylene-butadiene copolymer rubber. Among these rubber components, polyisoprene rubber is preferred. When the rubber component contains polyisoprene rubber, the crack propagation resistance after thermal degradation of the crosslinked rubber composition is further improved. Here, polyisoprene rubber may be natural or obtained through synthesis. In other words, polyisoprene rubber may include natural rubber (NR) and synthetic polyisoprene rubber (IR), and natural rubber is preferred in view of crack propagation resistance.

In view of crack propagation resistance, the rubber component contains polyisoprene rubber in an amount of preferably 50 mass% or more, more preferably 60 mass% or more, even more preferably 70 mass% or more, and still even more preferably 80 mass% or more, and the rubber component particularly preferably consists of 100 mass% of polyisoprene rubber. One of the above-mentioned rubber components may be used individually, or two or more of them may be used as a blend. The rubber component may also contain non-diene rubber to the extent that the effect of the present disclosure is not impaired.

### (Syndiotactic 1,2-Polybutadiene)

The rubber composition contains syndiotactic 1,2-polybutadiene. Note that the syndiotactic 1,2-polybutadiene is a crystalline polymer (resin) and is not encompassed in the above-described rubber component. The syndiotactic 1,2-polybutadiene, together with the rubber component described above, forms the double network described above in the crosslinked rubber composition, providing an excellent crack propagation resistance after thermal degradation.

The syndiotactic 1,2-polybutadiene preferably has a weight average molecular weight (Mw) of 100,000 to 750,000. When the weight average molecular weight of the syndiotactic 1,2-polybutadiene is 100,000 to 750,000, the formation of a double network is facilitated and the crack propagation resistance of the crosslinked rubber composition is further improved. In view of crack propagation resistance, the weight average molecular weight of the syndiotactic 1,2-polybutadiene is more preferably 120,000 to 750,000, even more preferably 140,000 to 750,000, and still even more preferably 160,000 to 750,000, and particularly preferably 160,000 to 600,000.

The syndiotactic 1,2-polybutadiene preferably has a syndiotacticity in 1,2-bonds of 60% or more. When the syndiotacticity in 1,2-bonds of the syndiotactic 1,2-polybutadiene is 60% or more, the formation of a double network is facilitated. The syndiotacticity in 1,2-bonds of the syndiotactic 1,2-polybutadiene is more preferably 65% or more, even more preferably 70% or more, and still even more preferably 80% or more in view of ease of the formation of a double network. Note that the syndiotacticity in 1,2-bonds may be 100%.

Note that the syndiotacticity refers to the content of syndiotactic structures in the 1,2-bonds.

The syndiotactic 1,2-polybutadiene preferably has a crystallinity of 25% to 80%. When the crystallinity of the syndiotactic 1,2-polybutadiene is 25% to 80%, the formation of a double network is facilitated and the crack propagation resistance of the crosslinked rubber composition is further improved. The crystallinity of the syndiotactic 1,2-polybutadiene is more preferably 25% to 70%, even more preferably 25% to 60%, and still even more preferably 25% to 50% in view of crack propagation resistance.

The syndiotactic 1,2-polybutadiene preferably has a melting point of 100°C to 180°C. When the melting point of the syndiotactic 1,2-polybutadiene is 100°C or higher, the network of syndiotactic 1,2-polybutadiene in the resulting crosslinked rubber composition becomes not too soft and the strength (crack propagation resistance) of the crosslinked rubber composition is improved. Furthermore, when the melting point of the syndiotactic 1,2-polybutadiene is 180°C or lower, scorching of rubber (such as degradation of rubber, cleavage of molecules, generation) can be suppressed during kneading of the rubber composition even if the temperature during kneading is equal to or higher than the melting point of the syndiotactic 1,2-polybutadiene and the physical properties of the crosslinked rubber composition are improved. Furthermore, when the melting point of the syndiotactic 1,2-polybutadiene is 100°C to 180°C, suitable formation of a network of the syndiotactic 1,2-polybutadiene is facilitated. From the viewpoint of ease of formation of a network of the syndiotactic 1,2-polybutadiene, the melting point of the syndiotactic 1,2-polybutadiene is more preferably 100°C to 170°C, even more preferably 100°C to 160°C, and particularly preferably 100°C to 150°C.

The syndiotactic 1,2-polybutadiene preferably has a 1,2-bond content of 80 mass% or more. When the 1,2-bond content of the syndiotactic 1,2-polybutadiene is 80 mass% or more, the formation of the double network is facilitated. Additionally, after the syndiotactic 1,2-polybutadiene forms a network structure, it selectively bears stress in response to input (deformation), allowing for more efficient dissipation of energy. This further improves the crack propagation resistance of the crosslinked rubber composition.

The weight average molecular weight, syndiotacticity in 1,2-bonds, crystallinity, melting point, and 1,2-bond content of the syndiotactic 1,2-polybutadiene described above can be measured by the methods described in

### EXAMPLES.

The content of the syndiotactic 1,2-polybutadiene in the rubber composition is preferably 5 to 40 parts by mass per 100 parts by mass of the rubber component. When the content of the syndiotactic 1,2-polybutadiene is 5 parts by mass or more per 100 parts by mass of the rubber component, a double network of the rubber component and syndiotactic 1,2-polybutadiene can be suitably formed. Furthermore, when the content of syndiotactic 1,2-polybutadiene is 40 parts by mass or less per 100 parts by mass of the rubber component, the syndiotactic 1,2-polybutadiene is prevented from forming a core of fracture as a foreign substance in the crosslinked rubber composition. Accordingly, when the content of the syndiotactic 1,2-polybutadiene is 5 to 40 parts by mass per 100 parts by mass of the rubber component, the crack propagation resistance of the crosslinked rubber composition is further improved. In view of crack propagation resistance, the content of the syndiotactic 1,2-polybutadiene is more preferably 5 to 35 parts by mass, particularly preferably 15 to 35 parts by mass per 100 parts by mass of the rubber component.

The above syndiotactic 1,2-polybutadiene is obtained, for example, by polymerizing 1,3-butadiene monomer using an iron-based catalyst composition, a chromium-based catalyst composition, a cobalt-based catalyst composition, or the like, in an organic solvent containing an aliphatic solvent. For example, it can be obtained by the polymerization methods disclosed in publications, such as JP 2000-119324 A, JP 2000-119325 A, JP 2000-119326 A, JP 2004-528410 A, JP 2005-518467 A, JP 2005-527641 A, JP 2009-108330 A, JP H7-25212 A, JP H6-306207 A, JP H6-199103 A, JP H6-92108 A, and JP H6-87975 A. Commercially available products can also be used as the syndiotactic 1,2-polybutadiene. Commercial products include RB840, RB830, and other products manufactured by JSR Corporation.

Examples of the iron-based catalyst composition include, for instance, a catalyst composition obtained by mixing (a) an iron-containing compound, (b) an α-acylphosphonate diester, and (c) an organic aluminum compound; a catalyst composition obtained by mixing (a) an iron-containing compound, (b) an α-acylphosphonate diester, (c) an organic aluminum compound, and another organic metal compound or Lewis base; and a catalyst composition obtained by mixing (a) an iron-containing compound, (b) a dihydrocarbyl hydrogen phosphite, and (c) an organic aluminum compound.

The (a) iron-containing compound is not particularly limited but preferred examples include iron carboxylates, organic iron phosphates, organic iron phosphonates, organic iron phosphinates, iron carbamates, iron dithiocarbamates, iron xanthates, iron α-diketonates, iron alkoxides or aryloxides, and organic iron compounds

An example of the chromium-based catalyst composition is a three-component catalyst system containing (a) a chromium-containing compound, (b) an alkylaluminum hydride compound, and (c) a hydrogen phosphite ester. Various chromium-containing compounds can be used as the component (a) of the chromium-based catalyst composition. Generally, it is advantageous to use chromium-containing compounds soluble in hydrocarbon solvents such as aromatic, aliphatic, or cycloaliphatic hydrocarbons. However, it is also possible to use insoluble chromium-containing compounds dispersed in the polymerization medium to generate catalytically active species. Hence, any limitation should not be placed on chromium-containing compounds to ensure solubility.

Furthermore, examples of chromium in the (a) chromium-containing compound include, but are not limited to, chromium carboxylates, chromium β-diketonate, chromium alkoxides or aryloxides, chromium halides, pseudo-chromium halides, and organic chromium compounds.

Examples of the cobalt-based catalyst composition include a catalyst system including a soluble cobalt compound such as cobalt octoate, cobalt 1-naphthenate, and cobalt benzoate, an organic aluminum compound such as trimethylaluminum, triethylaluminum, tributylaluminum, and triphenylaluminum, and carbon disulfide, for example.

### (Organic Peroxide)

The rubber composition contains an organic peroxide. The organic peroxide acts as a crosslinking agent and crosslinks the rubber composition. Since the organic peroxide is highly reactive with the vinyl bonds (1,2-bonds) of the syndiotactic 1,2-polybutadiene, crosslinking by the organic peroxide is considered to improve the crack propagation resistance compared to typical crosslinking by sulfur (vulcanization).

Examples of the organic peroxide include, but are not particularly limited to, tert-butyl hydroperoxide, 1,1,3,3-tetramethylbutyl hydroperoxide, cumene hydroperoxide, p-menthane hydroperoxide, diisopropyl benzene hydroperoxide, dicumyl peroxide, di-tert-butyl peroxide, di-tert-hexyl peroxide, diisopropyl benzene hydroperoxide, tert-butyl cumyl peroxide, di(2-tert-butylperoxyisopropyl) benzene, 2,5-dimethyl-2,5-di(tert-butylperoxy)hexane, peroxybenzoic acid, benzoyl peroxide, 1,1-bis(1,1-dimethylethylperoxy) cyclohexane, 1,1-bis(tert-butylperoxy) cyclohexane, 1,1-bis(tert-butylperoxy) -3,3,5-trimethylcyclohexane, 1,1-bis(tert-hexylperoxy) -3,3,5-trimethylcyclohexane, 1,1-bis(tert-hexylperoxy)cyclohexane, 2,2-bis(4,4-di-(tert-butylperoxy)cyclohexyl)propane, n-butyl-4,4-di-(tert-butylperoxy)valerate, tert-butylperoxy laurate, tert-butylperoxy-2-ethylhexanoate, 1,1,3,3-tetramethylbutylperoxy-2-ethylhexanoate, tert-hexylperoxy-2-ethylhexanoate, tert-butylperoxy-2-ethylhexanoate, tert-butyl peroxyacetate, cyclohexanone peroxide, acetylacetone peroxide, diisopropyl peroxydicarbonate, and di(4-tert-butylcyclohexyl) peroxydicarbonate. The organic peroxide is preferably dicumyl peroxide. These organic peroxides may be used alone or in combination of two or more.

The amount of the organic peroxide is preferably in a range of 1 to 10 parts by mass per 100 parts by mass of the rubber component. When the content of the organic peroxide is 1 part by mass or more per 100 parts by mass of the rubber component, the rubber composition can be sufficiently crosslinked, and when the content is 10 parts by mass or less, the crosslinked rubber composition can ensure sufficient rubber elasticity.

### (Co-crosslinking agent)

The rubber composition may contain a co-crosslinking agent. Examples of the co-crosslinking agent include ethylene glycol dimethacrylate, trimethylolpropane trimethacrylate, zinc methacrylate, and magnesium methacrylate. The content of the co-crosslinking agent is preferably 1 to 10 parts by mass per 100 parts by mass of the rubber component.

### (Filler)

The rubber composition may further include a filler. The inclusion of the filler improves the strength of the crosslinked rubber composition.

Examples of the filler include carbon black and inorganic fillers. These fillers may be used alone or in a combination of two or more.

The content of the filler in the rubber composition is preferably 10 to 160 parts by mass, more preferably 15 to 140 parts by mass, even more preferably 15 to 120 parts by mass, and particularly preferably 20 to 120 parts by mass, per 100 parts by mass of the rubber component.

There are no particular limitations on the carbon black used, and examples include SAF, ISAF, IISAF, HAF, FEF, and GPF grade carbon black. Additionally, the nitrogen adsorption specific surface area (N₂SA, measured in accordance with JIS K 6217-2:2001) of the carbon black is preferably 20 to 160 m²/g, more preferably 25 to 160 m²/g, even more preferably 25 to 150 m²/g, and particularly preferably 30 to 150 m²/g. Furthermore, the dibutyl phthalate oil absorption (DBP, measured in accordance with JIS K 6217-4:2008) of the carbon black is preferably 40 to 160 mL/100 g, more preferably 40 to 150 mL/100 g, even more preferably 50 to 150 mL/100 g, still even more preferably 60 to 150 mL/100 g, and particularly preferably 60 to 140 mL/100 g. One type of carbon black may be used alone or two or more types of carbon black may be used in combination.

From the viewpoint of improving the strength of the crosslinked rubber composition, the content (mass%) of the carbon black in the total amount of the fillers is preferably 40 mass% or more, more preferably 50 mass% or more, even more preferably 70 mass% or more, and particularly preferably 90 mass% or more.

Silica is preferred as the inorganic filler. Examples of the silica include wet silica (hydrous silicate), dry silica (anhydrous silicate), calcium silicate, and aluminum silicate. Among these, wet silica is preferable. Additionally, examples of the inorganic filler other than silica include aluminum hydroxide and clay.

The BET specific surface area (measured according to ISO 5794/1) of the wet silica is preferably 40 to 350 m²/g, and more preferably 80 to 300 m²/g. Silica having a BET specific surface area within the aforementioned ranges can provide both the rubber reinforcing property and dispersiveness into the rubber component. One type of silica may be used alone or two or more types of silica may be used in combination.

### (Silane Coupling Agent)

When silica is used as a filler, a silane coupling agent such as bis(3-triethoxysilylpropyl) polysulfide, bis(3-triethoxysilylpropyl) disulfide, and 3-trimethoxysilylpropyl benzothiazyl tetrasulfide is suitably used. The content of the silane coupling agent is preferably selected within the range of 2 to 20 parts by mass per 100 parts by mass of silica.

### (Vulcanizing Agent)

The rubber composition is preferably free of a vulcanizing agent (i.e., the content is 0 parts by mass), or the content of a vulcanizing agent is 1 part by mass or less per 100 parts by mass of the rubber component. As used herein, a vulcanizing agent refers to a crosslinking agent that acts to crosslink the rubber component by sulfur.

Examples of the vulcanizing agent include sulfur (e.g., powdered sulfur), morpholine disulfide, and polymer polysulfides.

### (Other Ingredients)

In addition to the rubber component, syndiotactic 1,2-polybutadiene, organic peroxide, co-crosslinking agent, filler, silane coupling agent, and vulcanizing agent mentioned above, the rubber compositions may, if desired, contain compounding agents normally used in the rubber industry, such as antioxidants, softeners, zinc oxide, and stearic acid, for example.

### <Method of Manufacturing Crosslinked Rubber Composition>

A method of manufacturing a crosslinked rubber composition of the present disclosure includes kneading a rubber composition containing a rubber component and syndiotactic 1,2-polybutadiene at a temperature equal to or higher than the melting point of the syndiotactic 1,2-polybutadiene (mixing step); and adding the organic peroxide to the kneaded rubber composition (unvulcanized rubber composition) and crosslinking the rubber composition at a temperature equal to or higher than the melting point of the syndiotactic 1,2-polybutadiene (crosslinking step).

According to such a method of manufacturing a crosslinked rubber composition of the present disclosure, a double network can be suitably formed in the crosslinked rubber composition, thereby providing a crosslinked rubber composition having further improved crack propagation resistance after thermal degradation. Furthermore, the method of manufacturing a crosslinked rubber composition of the present disclosure described above can also be used to obtain the crosslinked rubber composition of the present disclosure described above.

### (Kneading Step)

In the kneading (master batch kneading) of the rubber composition containing the rubber component and the syndiotactic 1,2-polybutadiene, setting the temperature during the kneading equal to or higher than the melting point of the syndiotactic 1,2-polybutadiene allows the mutual dissolution of the syndiotactic 1,2-polybutadiene into the rubber component. Subsequent crosslinking through the addition of the organic peroxide forms a double network in the crosslinked rubber composition, thereby providing a crosslinked rubber composition with a high strength, thereby significantly improving the crack propagation resistance. The kneading temperature of the rubber composition containing the rubber component and syndiotactic 1,2-polybutadiene is preferably higher than the melting point of syndiotactic 1,2-polybutadiene by 10°C to 50°C, more preferably higher than the melting point by 12°C to 50°C. When the kneading temperature is at least 10°C higher than the melting point of the syndiotactic 1,2-polybutadiene, the syndiotactic 1,2-polybutadiene can be mutually dissolved with the rubber component. Furthermore, when the kneading temperature is no more than 50°C higher than the melting point of the syndiotactic 1,2-polybutadiene, thermal degradation of the rubber component and/or the syndiotactic 1,2-polybutadiene can be suitably prevented, which further improves the crack propagation resistance.

For kneading the rubber composition, kneading apparatuses such as Banbury mixers, rolls, and internal mixers can be suitably used.

Note that the temperature during kneading refers to the temperature of the master batch of the rubber composition at the time it is discharged from the kneading equipment. Specifically, this means the internal temperature of the master batch immediately after it is discharged from the kneading apparatus, as measured by a temperature sensor or similar device. However, if there is a means of measuring the temperature of the rubber composition in the kneading apparatus, the temperature of the master batch when it is discharged may be measured.

As used herein, the master batch refers to a mixture obtained at the kneading stage where the rubber component and syndiotactic 1,2-polybutadiene are kneaded without adding the organic peroxide (crosslinking agent).

### (Crosslinking Step)

By adding the organic peroxide to the rubber composition (unvulcanized rubber composition) kneaded as described above, and crosslinking the rubber composition at a temperature equal to or higher than the melting point of the syndiotactic 1,2-polybutadiene, the syndiotactic 1,2-polybutadiene can be melted and then recrystallized during crosslinking. This further enhances the formation of the net-like three-dimensional network (double network) described above in the crosslinked rubber composition. The resulting crosslinked rubber composition has an even excellent crack propagation resistance.

Note that the temperature from the addition of the organic peroxide to the kneaded rubber composition (uncrosslinked rubber composition) until the rubber composition is crosslinked is preferably maintained at a temperature at which the crosslinking reaction does not proceed. For example, in cases where the mixture after adding the organic peroxide to the rubber composition is kneaded, the kneading temperature is preferably a temperature at which the crosslinking reaction does not proceed.

It is believed that by crosslinking the kneaded rubber composition (unvulcanized rubber composition) at a temperature equal to or higher than the melting point of the syndiotactic 1,2-polybutadiene, the syndiotactic 1,2-polybutadiene becomes partially mutually dissolved with the rubber component and is fixed as a network in the rubber component. As a result, the above-described double network can be formed in the crosslinked rubber composition. However, this does not mean that no double network is formed at all when crosslinking is performed at temperatures below the melting point of the syndiotactic 1,2-polybutadiene. Even when crosslinking is performed at a temperature below the melting point of syndiotactic 1,2-polybutadiene, a part of the syndiotactic 1,2-polybutadiene can dissolve, allowing at least partial formation of the double network. For instance, it is conceivable that even at temperatures at least 15°C lower than the melting point and below the melting point, a double network can be at least partially formed.

The crosslinking temperature is preferably at least 5°C higher, more preferably at least 10°C higher, and even more preferably at least 15°C higher than the melting point of the syndiotactic 1,2-polybutadiene. Additionally, it is preferable that the crosslinking temperature is no more than 50°C higher than the melting point of the syndiotactic 1,2-polybutadiene.

Note that the temperature during crosslinking in the method of manufacturing a crosslinked rubber composition refers to the maximum temperature reached during the progress of crosslinking from the beginning of crosslinking (which typically corresponds to the set temperature of the crosslinking apparatus).

There are no particular limitations on the apparatus, method, conditions, etc., for performing the crosslinking, which may be appropriately selected depending on the purpose.

### <Rubber Product>

A rubber product of the present disclosure is selected from the group consisting of a tire, a seismic isolation rubber, a rubber crawler, a hose, and a fender protection material, and includes the above-described crosslinked rubber composition, or a crosslinked rubber composition obtained by the method of manufacturing a crosslinked rubber composition. The rubber product of the present disclosure is excellent in crack propagation resistance after thermal degradation because it includes the crosslinked rubber composition described above or a crosslinked rubber composition obtained by the method of manufacturing a crosslinked rubber composition described above.

### EXAMPLES

The present disclosure will be described in more detail below with reference to examples, although the present disclosure is not limited to these examples.

### <sPB>

As syndiotactic 1,2-polybutadiene (sPB), "JSR RB^{®} 840" (JSR RB is a registered trademark in Japan, other countries, or both) manufactured by JSR Corporation was used. The sPB had a weight average molecular weight of 163,000, a syndiotacticity in 1,2-bonds of 68%, a crystallinity of 36%, a melting point of 122°C, and a 1,2-bond content of 84 mass%.

Note that the properties of syndiotactic 1,2-polybutadiene were measured according to the following method.

### (Weight Average Molecular Weight (Mw))

The weight average molecular weight was measured by gel permeation chromatography (GPC: HLC-8220/HT manufactured by Tosoh Corporation) by using a differential refractometer as a detector, and calculated in terms of polystyrene by referencing monodisperse polystyrene as a standard. Note that the column used was GMHHR-H(S) HT (manufactured by Tosoh Corporation), the elution solvent was trichlorobenzene, and the measurement temperature was 140°C.

### (1,2-Bond Content and Syndiotacticity in 1,2-Bonds)

The 1,2-bond content and the syndiotacticity in 1,2-bonds of the syndiotactic 1,2-polybutadiene were determined by ¹H and ¹³C nuclear magnetic resonance (NMR) analyses.

### (Melting Point)

A sample of syndiotactic 1,2-polybutadiene was placed in a differential scanning calorimetry (DSC) apparatus. The temperature was increased at a rate of 10°C/min, and the peak melting temperature of the DSC curve was determined as the melting point.

### (Degree of Crystallinity)

The densities of 1,2-polybutadiene were measured using the underwater displacement method. The density of 1,2-polybutadiene with a crystallinity of 0% was determined to be 0.889 g/cm³, and the density of 1,2-polybutadiene with a crystallinity of 100% was determined to be 0.963 g/cm³. The degree of crystallinity was calculated by converting these densities.

### <Example 1 and Comparative Examples 1 to 3>

Four rubber compositions were prepared according to the formulation listed in Table 1.

Kneading was performed in two stages, namely, a master batch kneading stage where neither crosslinking agents (sulfur, organic peroxide) nor a vulcanization accelerator were added (temperature during kneading: 155°C), and a final stage of kneading where crosslinking agents and a vulcanization accelerator were blended into the master batch (temperature during kneading: 105°C). Here, during the master batch kneading stage and the final stage of kneading, the temperature during kneading was measured by a temperature sensor to determine the internal temperature of the master batch immediately after the master batch was discharged from the kneading apparatus.

Next, the rubber composition obtained at the final stage of kneading was crosslinked at 160°C (crosslinking temperature) by a crosslinking apparatus (vulcanization apparatus). Here, the crosslinking temperature was confirmed as the highest temperature reached by a thermometer installed in the crosslinking apparatus (vulcanization apparatus).

Regarding each sample of the crosslinked rubber composition, based on the presence or absence of sPB, the melting point, and the crosslinking temperature conditions, it is considered that the samples of Comparative Example 2 and Example 1 had a net-like three-dimensional network (double network) formed in the crosslinked rubber. This network had portions made from crystals of sPB and portions in which the rubber component and sPB were mutually dissolved.

The crack propagation resistance of these four crosslinked rubber compositions was measured and evaluated by the following method. The results are listed in Table 1.

### (Crack Propagation Resistance (After Thermal Degradation))

JIS No. 3 test specimens were prepared from the crosslinked rubber compositions and thermally deteriorated at 100°C for 24 hours under an air atmosphere.

A 0.5 mm crack was introduced into the center of each test specimen in the longitudinal direction of the test specimen, and fatigue was repeatedly given at 80°C with a strain ranging from 30% to 100%. The cycle count until the test specimen fractured was determined. The results of the rubber compositions of Comparative Examples 1 and 2 were expressed as indexes, with the result of Comparative Example 1 as 100. In addition, the results of the rubber compositions of Comparative Example 3 and Example 1 were expressed as indexes, with the result of Comparative Example 3 as 100. A larger index indicates a better crack propagation resistance. Crack propagation resistance (index) = {(cycle count until the test specimen fractured)/(cycle count until the test specimen in Comparative Example 1 or 3 fractured)} × 100

**[Table 1]**

| | | | Comp. Ex. 1 | Comp. Ex. 2 | Comp. Ex. 3 | Example 1 |
|---|---|---|---|---|---|---|
| Content of blending | Natural rubber *1 | parts by mass | 100 | 100 | 100 | 100 |
| | Carbon black *2 | | 50 | 50 | 50 | 50 |
| | sPB *3 | | - | 20 | - | 20 |
| | Sulfur *4 | | 1.6 | 1.6 | - | - |
| | Vulcanization accelerator *5 | | 0.7 | 0.7 | - | - |
| | Organic peroxide *6 | | - | - | 4 | 4 |
| | Other ingredients *7 | | 6 | 6 | 6 | 6 |
| Evaluation result | Crack propagation resistance (after thermal degradation) | Index | 100 | 136 | 100 | 192 |

| | | | | | | |
|---|---|---|---|---|---|---|
| *1 Natural rubber: RSS #1 *2 Carbon black: trade name "Asahi #70K" manufactured by Asahi Carbon Co., Ltd. *3 sPB: syndiotactic 1,2-polybutadiene, trade name "JSR RB^{®} 840" manufactured by JSR Corporation *4 Sulfur: trade name "HK200-5" manufactured by Hosoi Chemical Industry Co., Ltd. *5 Vulcanization accelerator: trade name " Sanceler NS-G" manufactured by Sanshin Chemical Industry Co., Ltd. *6 Organic peroxide: dicumyl peroxide (compound name), trade name "Parkmyl D-40" manufactured by NOF Corporation *7 Other ingredients: total amount of antioxidant, zinc oxide, and other substances | | | | | | |

The results in Table 1 indicate that the crosslinked rubber composition of Example 1 according to the present disclosure, which was crosslinked with the organic peroxide, had significantly improved crack propagation resistance after thermal degradation compared to the crosslinked rubber composition of Comparative Example 3, which had the same composition except for not containing sPB.

On the other hand, the crosslinked rubber composition of Comparative Example 2, which was crosslinked (vulcanized) by sulfur instead of the organic peroxide, exhibited a smaller improvement in crack propagation resistance after thermal degradation than the crosslinked rubber composition of Comparative Example 1, which had the same composition except for not containing sPB.

### INDUSTRIAL APPLICABILITY

The rubber composition of the present disclosure can be used in rubber products, such as tires, seismic isolation rubber, rubber crawlers, hoses, and fender protection materials.

## Claims

1. A crosslinked rubber composition formed by crosslinking a rubber composition comprising a rubber component, syndiotactic 1,2-polybutadiene, and an organic peroxide,
wherein a net-like three-dimensional network is formed in a matrix of the rubber component, and
the net-like three-dimensional network comprises a portion formed of a crystal of the syndiotactic 1,2-polybutadiene and a portion in which the rubber component and the syndiotactic 1,2-polybutadiene are mutually dissolved.

2. The crosslinked rubber composition according to claim 1, wherein the syndiotactic 1,2-polybutadiene has a weight average molecular weight of 100,000 to 750,000.

3. The crosslinked rubber composition according to claim 1, wherein the syndiotactic 1,2-polybutadiene has a syndiotacticity in 1,2-bonds of 60% or more.

4. The crosslinked rubber composition according to claim 1, wherein the syndiotactic 1,2-polybutadiene has a crystallinity of 25% to 80%.

5. The crosslinked rubber composition according to claim 1, wherein the syndiotactic 1,2-polybutadiene has a melting point of 100°C to 180°C.

6. The crosslinked rubber composition according to claim 1, wherein the syndiotactic 1,2-polybutadiene has a 1,2-bond content of 80 mass% or more.

7. The crosslinked rubber composition according to claim 1, wherein a content of the syndiotactic 1,2-polybutadiene in the rubber composition is 5 to 40 parts by mass per 100 parts by mass of the rubber component.

8. The crosslinked rubber composition according to claim 1, wherein the rubber component comprises polyisoprene rubber.

9. The crosslinked rubber composition according to claim 1, wherein the rubber composition further comprises a filler.

10. The crosslinked rubber composition according to claim 1, wherein a content of the organic peroxide in the rubber composition is 1 to 10 parts by mass per 100 parts by mass of the rubber component.

11. The crosslinked rubber composition according to claim 1, wherein the rubber composition is free of a vulcanizing agent, or a content of a vulcanizing agent is 1 part by mass or less per 100 parts by mass of the rubber component.

12. A method of manufacturing a crosslinked rubber composition, comprising:
kneading a rubber composition comprising a rubber component and syndiotactic 1,2-polybutadiene at a temperature equal to or higher than a melting point of the syndiotactic 1,2-polybutadiene; and
adding an organic peroxide to the kneaded rubber composition and crosslinking the rubber composition at a temperature equal to or higher than the melting point of the syndiotactic 1,2-polybutadiene.

13. A rubber product selected from the group consisting of a tire, a seismic isolation rubber, a rubber crawler, a hose, and a fender protection material, comprising
the crosslinked rubber composition according to any one of claims 1 to 11, or a crosslinked rubber composition obtained by the method of manufacturing a crosslinked rubber composition according to claim 12.
